# EUROPÄISCHE PATENTSCHRIFT

(11) **EP 2 009 475 B1**
(45) Veröffentlichungstag und Bekanntmachung des Hinweises auf die Patenterteilung: **26.10.2011**
(21) Anmeldenummer: 07012568.7
(22) Anmeldetag: 27.06.2007
(51) Int. Cl.: G02B 7/02

(54) **Feinmechanisch-optisches System und Verfahren zur Herstellung eines Verbundes von einzeln in Fassungen gehalterten optischen Elementen**
Optical and precision mechanical system and method for creating a network of optical elements mounted in individual holders
Système optico-mécanique précis et procédé destiné à la fabrication d'un composite d'éléments optiques individuels contenus dans des matières articulées

(43) Veröffentlichungstag der Anmeldung: 31.12.2008
(73) Patentinhaber: JENOPTIK Optical Systems GmbH, 07745 Jena (DE)
(72) Erfinder: Schletterer, Thomas, 07646 Stadtroda (DE); Hillner, Andre, 07745 Jena (DE); Steinbach, Manfred, 07749 Jena (DE)
(74) Vertreter: Schaller, Renate

(56) Entgegenhaltungen:
- EP-A- 1 148 368
- EP-A- 1 164 397
- EP-A- 1 646 074
- WO-A-2005/116773
- DE-A1- 10 259 599
- US-A- 6 122 114
- US-A1- 2007 008 627
- US-B1- 6 574 053

## Beschreibung

Die Erfindung bezieht sich auf ein feinmechanisch-optisches System, das einen Verbund von optischen Elementen aufweist, die in miteinander verschraubten Fassungen gehaltert sind.

Die Erfindung bezieht sich ferner auf ein Verfahren zur Herstellung eines Verbundes von einzeln in Fassungen gehalterten optischen Elementen.

Optische Systeme höchster Abbildungsgüte verlangen, dass eine Vielzahl lagestabil und spannungsarm gefasster optischer Linsen im Zehntelmikrometerbereich zueinander positioniert und fest miteinander verbunden werden.

Aus der EP 1 148 368 A2 ist eine Vorrichtung zum Verbinden von Fassungen für optische Elemente bekannt, bei der die Fassungen über Elektro-Permanentmagneten zueinander fixiert werden. Die Fassungen können feinfühlig zueinander justiert werden, bevor der Elektro-Permanentmagnet durch die Spule aufmagnetisiert und damit eine permanente Haltekraft zwischen den Fassungen erzeugt wird.

In der DE 102 59 599 A1 wird ein Verfahren zum Verschrauben von mehreren Fassungen mit darin enthaltenen optischen Elementen beschrieben. Es sind mehrere, entlang einer Kreisbahn positionierte Schrauben vorgesehen, die mit ihren Schraubenköpfen über Unterlegscheiben auf einer obersten Fassung eines Fassungsstapels aufliegen. Gemäß dem vorgeschlagenen Verfahren werden Umgebungsbereiche der Schrauben als Referenzbereiche der Fassungsoberfläche nach der Verschraubung interferometrisch vermessen. Das auf die jeweilige Schraube eingebrachte Drehmoment wird derart variiert, dass annähernd gleiche Interferenzmuster entstehen.

Von Nachteil ist der hohe gerätetechnische Aufwand, da für die Montage eines Objektivs immer ein Interferometer benötigt wird. Zwar lassen sich durch die interferometrischen Messungen Deformationszustände bei der Verschraubung an Umgebungsbereichen der Schrauben ermitteln, doch gewährleisten die ermittelten interferometrischen Messdaten nicht, dass diese Verschraubungen hinsichtlich der Festigkeit und Stabilität ausreichende Eigenschaften aufweisen. Es ist zudem nicht erkennbar, durch welche Maßnahmen die gegenseitige Ausrichtung der einzelnen optischen Elemente gewährleistet werden kann.

US 2007/0008627 beschreibt eine Vorrichtung zur Verbindung von Fassungen mit radial nach außen ragenden Flanschen.

Es besteht deshalb die Aufgabe, bei der Herstellung eines Verbundes aus einer Vielzahl gefasster optischer Linsen die gegenseitige Ausrichtung der optischen Linsen während der Montage und eine hohe Festigkeit des Verbundes nach der Montage mit geringem gerätetechnischen Aufwand zu gewährleisten.

Diese Aufgabe wird bei einem feinmechanisch-optischen System der eingangs genannten Art dadurch gelöst, dass an den Fassungen radial nach außen ragende Flansche angebracht sind, die bei benachbarten Fassungen mit einander zugewandten Fügeflächen aneinander stoßen und durch axial spannende Verschraubungen zwischen paarweise gegenüberliegenden Biegeelementen eingespannt sind.

Durch die Erfindung wird zwischen den einzelnen Fassungen eine gefederte Verbindung mit sehr hoher und gleichmäßiger Federkraft geschaffen, mit der eine zu einer starren Verbindung weitgehend vergleichbare Verbindungskraft erzeugt werden kann. Aufgrund eines langen und damit gut messbaren Feder- bzw. Verstellweges sind gleichmäßige Anzugskräfte bei allen axial spannenden Verschraubungen zu erreichen.

Vorteilhafte Ausgestaltungen und Weiterbildungen ergeben sich aus den abhängigen Ansprüchen.

Eine besondere Ausgestaltung der Erfindung sieht kreisringförmig ausgebildete und koaxial zueinander angeordnete Fügeflächen vor, zwischen denen mehrere Durchgangsbohrungen eingearbeitet sind, wobei die Durchgangsbohrungen benachbarter Fassungen miteinander fluchten.

Da bei Objektiven nur ein sehr geringes Platzangebot zur Verfügung steht, müssen hohe Kräfte auf sehr engem Raum und auf einem möglichst großen messbaren Weg erzeugt werden. Von besonderer Bedeutung ist die Form der hoch belasteten und hinsichtlich des Materials zwingend gut auszunutzenden Biegelemente, die deshalb bevorzugt dem Biegemomentverlauf entsprechend einem Träger gleicher Biegebeanspruchung angepasst ist. Bei derartigen Biegeelementen verändert sich der Querschnitt derart, dass bei Beanspruchung gleichmäßige Materialspannungen vorliegen.

Insbesondere ist vorgesehen, dass die Biegeelemente in einer Dimension dem Biegemomentverlauf angepasst sind und in einer dazu senkrechten Richtung eine gleichmäßige Ausdehnung aufweisen. Solche Biegeelemente können z. B. als zweiseitige Dreiecksfedern ausgebildet sein, die eine gleichmäßige Dicke aufweisen.

Möglich ist es auch, dass die Biegeelemente in einer Dimension eine derartige Variation der Ausdehnung aufweisen, dass bei einer ebenen Grundfläche eine darüber liegende Oberfläche bogenförmig gekrümmt ist, und dass in einer dazu senkrechten Richtung eine gleichmäßige Ausdehnung vorliegt.

Zur Ausbildung der axial spannenden Verschraubungen sind mit lateralem Spiel durch die Durchgangsbohrungen in den Flanschen hindurchgeführte Gewindestifte vorgesehen, die an einem Ende ein Biegeelement festsitzend und an dem anderen Ende das andere Biegeelement durch eine auf den Gewindestift aufgeschraubte Mutter axial verschiebbar tragen.

Vorteilhaft ist es ferner, wenn die paarweise gegenüberliegenden Biegeelemente mit den zugehörigen Gewindestiften konzentrisch zu den zueinander ausgerichteten optischen Achsen angeordnet sind.

Gegenstand der Erfindung ist ferner ein Verfahren zur Herstellung eines Verbundes von einzeln in Fassungen gehalterten optischen Elementen, bei dem in einem mehrstufigen Justage- und Montageprozess zunächst
- eine axial spannende Verschraubung der Fassungen mit einer Teilvorspannkraft erfolgt, wonach
- durch laterales Verschieben der einzeln gefassten optischen Elemente die optischen Achsen der optischen Elemente zueinander fluchtend ausgerichtet und danach
- die Fassungen axial verspannend mit einer derartigen Vorspannkraft verschraubt werden, dass ein gegenseitiger fester Sitz der Fassungen zueinander gewährleistet ist.

Die Erfindung soll nachstehend anhand der schematischen Zeichnung näher erläutert werden. Es zeigen:
- Fig. 1: einen Verbund aus gefassten optischen Linsen
- Fig. 2: eine Anordnung paarweise gegenüberliegender Biegeelemente
- Fig. 3: eine erste Ausführung eines Biegeelementes als zweiarmige Dreiecksfeder in einer Draufsicht
- Fig. 4: eine zweite Ausführung des Biegeelementes
- Fig. 5: eine dritte Ausführung des Biegeelementes

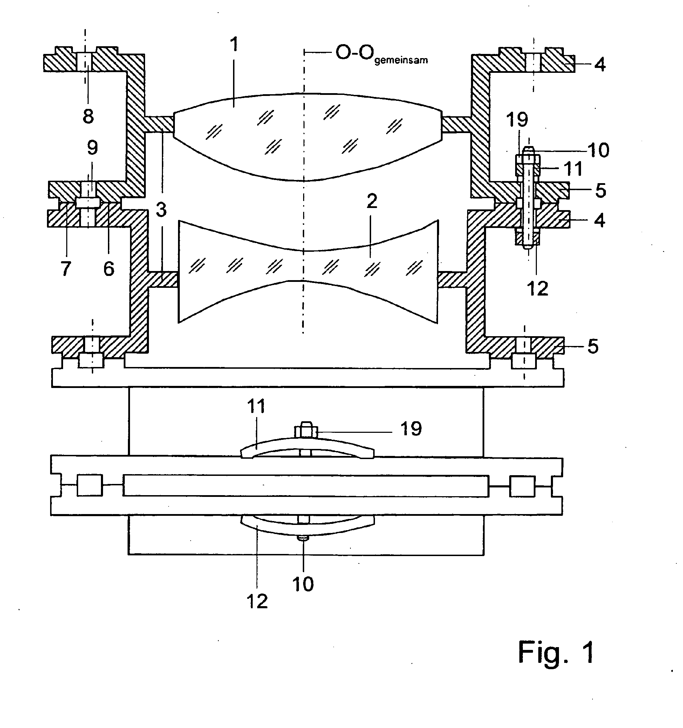

Bei dem in Fig. 1 gezeigten Verbund aus optischen Elementen, insbesondere optischen Linsen, sind die einzelnen Linsen 1, 2 mit ihren optischen Achsen lagestabil und spannungsarm in zugehörigen Fassungen 3 gehaltert.

Die Fassungen 3 weisen am Außenbereich radial nach außen ragende, bevorzugt vollständig umlaufende Flansche 4, 5 auf, so dass die Flansche 4, 5 mit der Fassung 3 einen u-förmigen Querschnitt ausbilden. Die Flansche 4, 5 sind vorderseitig mit senkrecht zur optischen Achse der Linse 1 gerichteten kreisringförmigen und koaxial zueinander angeordneten Fügeflächen 6, 7 versehen, die bei benachbarten Fassungen 3 aneinander stoßen, so dass die Fügeflächen 6, 7 Kontaktflächen zu Flanschen 4, 5 benachbarter Fassungen 3 bilden.

In die Flansche 4, 5 sind zwischen den Fügeflächen 6, 7 mehrere Durchgangsbohrungen 8, 9 eingearbeitet, wobei Durchgangsbohrungen 8, 9 benachbarter Fassungen 3 miteinander fluchten.

Zur Ausbildung axial spannender Verschraubungen sind durch die miteinander fluchtenden Durchgangsbohrungen 8, 9 Gewindestifte 10 mit geringem Spiel hindurchgeführt, so dass zum Zweck der Justierung ein gegenseitiges laterales Verschieben der Fassungen 3 entlang der Fügeflächen 6, 7 möglich ist. Bei der Justierung werden alle optischen Achsen der einzeln gefassten optischen Linsen 1, 2 zueinander fluchtend ausgerichtet, so dass eine gemeinsame optische Achse O-O_{gemeisam} für den Verbund resultiert.

Die Endbereiche der Gewindestifte 10 stehen mit Biegeelementen 11, 12 in Verbindung, die auf einander abgewandten rückseitigen Flächen der Flansche 4, 5 mit freien Enden und mit der hohlen Seite zu den miteinander verbundenen Flanschen 4, 5 gerichtet aufliegen, so dass die aneinander stoßenden Flansche 4, 5 benachbarter Fassungen 3 zwischen paarweise, mit entgegengesetzt gerichteter Federkraft gegenüberliegenden Biegeelementen 11, 12 aufgrund der axial spannenden Verschraubung eingespannt sind.

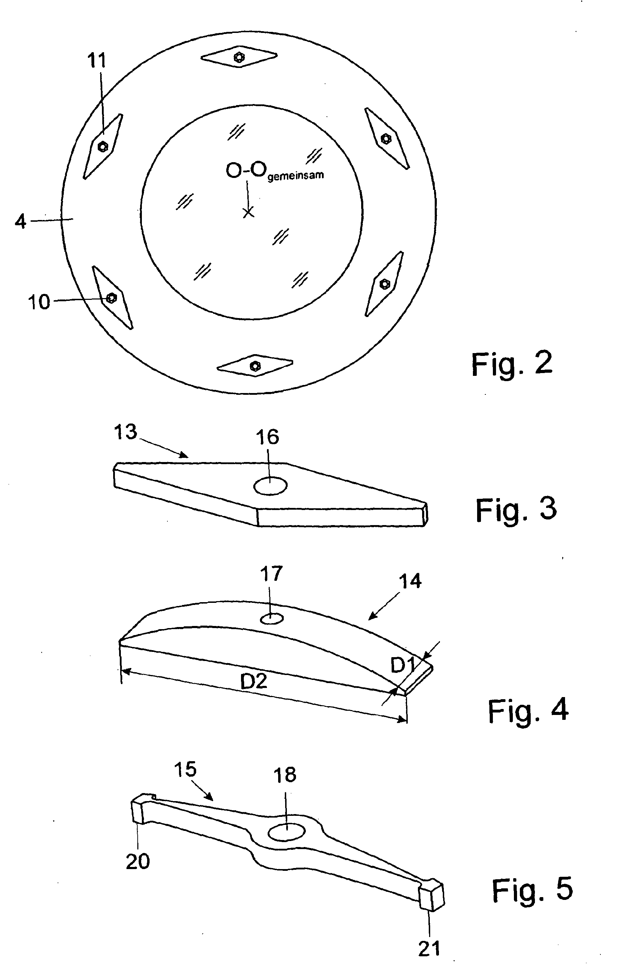

Gemäß Fig. 2 sind die paarweise gegenüberliegenden Biegeelemente 11, 12 mit den zugehörigen Gewindestiften 10 im Wesentlichen konzentrisch zu den zueinander ausgerichteten optischen Achsen und damit zur gemeinsamen optischen Achse O-O_{gemeinsam} angeordnet.

In einer bevorzugten Ausführungsform gemäß Fig. 3 sind die Biegelemente in der Grundform als zweiseitige Dreiecksfedern 13 von gleichmäßiger Dicke ausgebildet, wodurch die Biegelemente durch die Form dem Biegemomentverlauf angepasst sind, so dass ein Träger gleicher Biegebeanspruchung vorliegt. Der Vorteil dieser Ausführungsform besteht in der optimalen Materialausnutzung, die besonders wichtig bei Konstruktionen mit Platzmangel, wie z. B. bei Objektiven, ist. Weitere Formen für die Biegeelemente sind in den Figuren 4, 5 dargestellt.

Das in Fig. 4 gezeigte Biegeelement 14 weist in einer Dimension D1 eine gleichmäßige Ausdehnung auf und ist in einer dazu senkrechten Dimension D2 in seiner Ausdehnung dem Biegemomentverlauf angepasst, indem die Dicke derart variiert, dass über einer ebenen Grundfläche ein Bogen beschrieben wird.

Das in Fig. 5 gezeigte Biegeelement 15 weist ebenso wie das Biegeelement gemäß Fig. 3 eine gleichmäßige Dicke auf und ist in der Breitenausdehnung dem Biegemomentverlauf angepasst. An beiden Enden des Biegelementes 15 sind Auflageflächen 20, 21 zur Verringerung der Flächenpressung an der Auflagestelle vorgesehen. Die Größe der Auflageflächen 20, 21 richtet sich nach der zulässigen Flächenpressung des jeweiligen, mit hoher Flexibilität auswahlbaren Materials.

Die mit hoher Gleichmäßigkeit herstellbaren Biegeelemente 11 - 15 sind mittig mit einer Bohrung 16 - 18 ausgestattet, die als Durchgangsbohrung oder als Gewindebohrung ausgebildet sein kann.

Ein Biegeelementepaar ist gemäß Fig. 1 vorteilhafterweise so ausgeführt, dass ein Biegeelement 11 eine Gewindebohrung und das andere Biegeelement 12 eine Durchgangsbohrung besitzt. Der Gewindestift 10 ist dabei mit einem Stiftende direkt in die Gewindebohrung des einen Biegeelementes 11 eingeschraubt. Auf das andere Stiftende, das durch die Durchgangsbohrung des anderen Biegeelementes 12 hindurchgeführt ist, ist eine Mutter 19 aufgeschraubt, so dass durch Anziehen der Mutter 19 eine axiale Verspannung hergestellt werden kann, bei der aufgrund des Durchbiegens der beiden Biegeelemente 11, 12 eine definierte Verbindungskraft erzeugt wird.

Ein Vorteil des erfindungsgemäßen Verbundes besteht darin, dass durch die Biegeelemente 11 - 15 eine Verschraubung mit einer flachen Kennlinie resultiert, so dass im Unterschied zu den üblicherweise starr verschraubten Linsenkombinationen eine Vorspannkraft über einen relativ großen Verstellweg erzeugt werden kann. Dieser Weg ist bei den hier vorgeschlagenen Biegeelementen 11 - 15 ausreichend für hinreichend genaue Kraftmessungen als Voraussetzung einer gut steuerbaren Verschraubung, um an allen Gewindestiften 10 untereinander eine gleichmäßige Vorspannkraft erzeugen zu können. Die durch die Erfindung erreichte Steuerbarkeit und Gleichmäßigkeit der Vorspannkraft an allen Gewindestiften 10 gewährleistet, den im Zehntelmikrometerbereich genau justierten Zustand der gefassten Linsen 1, 2 auch mit dieser Genauigkeit einzufrieren.

Ein weiterer Vorteil der Erfindung besteht darin, dass der Justage- und Montageprozess mehrstufig erfolgen kann. Zunächst wird durch Anzug der Mutter 19 nur ein etwa zehnprozentiger Teil der Vorspannkraft aufgebracht, so dass ein Justieren der gefassten Linse 1 durch laterales Verschieben entlang der Fügeflächen 6, 7 noch durchgeführt werden kann. Geeignete optische Messverfahren sind vorgesehen, um die Position der Linsen 1, 2 zu bestimmen. Nach erfolgter Justierung wird die volle Vorspannkraft durch weiteres Anziehen der Mutter 19 eingestellt, so dass ein fester Sitz der Fassungen zueinander erreicht wird.

Durch den relativ großen Vorspannweg ist die Verbindung unempfindlich gegenüber Setzeffekten, d. h. bei geringfügigen Setzeffekten an den Fügeflächen 6, 7 bleibt die Vorspannkraft im Wesentlichen erhalten.

Die sehr gute Steuerbarkeit und Gleichmäßigkeit der Verbindung der gefassten Linsen 1, 2 hat eine hohe Reproduzierbarkeit der Verbindung zur Folge. Diese Eigenschaft ist von großem Vorteil, wenn einzelne gefasste Linsen 1, 2 ausgetauscht werden müssen.

Die Anzahl der Gewindestifte 10 und damit auch der Biegeelementpaare richtet sich nach dem Durchmesser der Fassungen sowie nach den abzusichernden mechanischen Belastungen.

## Patentansprüche

1. Feinmechanisch-optisches System, das einen Verbund von optischen Elementen aufweist, die in miteinander verschraubten Fassungen (3) gehaltert sind, wobei
an den Fassungen (3) radial nach außen ragende Flansche (4, 5) mit einander zugewandten Fügeflächen (6, 7) angebracht sind und die einander zugewandten Fügeflächen (6, 7) benachbarter Fassungen (3) aneinander stoßen, und wobei in die Flansche (4, 5) benachbarter Fassungen (3) miteinander fluchtende Durchgangsbohrungen (8, 9) eingearbeitet sind, **dadurch gekennzeichnet dass** zur Ausbildung axial spannender Verschraubungen in den Durchgangsbohrungen (8, 9) Gewindestifte (10) mit einem Spiel angeordnet sind, deren Enden mit Biegeelementen (11-15) in Verbindung stehen, sodass die aneinander stoßenden Flansche (4, 5) benachbarter Fassungen (3) zwischen paarweise, mit entgegengesetzt gerichteter Federkraft gegenüberliegenden Biegeelementen (11 - 15) eingespannt sind.

2. Feinmechanisch-optisches System nach Anspruch 1, **dadurch gekennzeichnet,**
**dass** die Fügeflächen (6, 7) kreisringförmig ausgebildet und koaxial zueinander angeordnet sind.

3. Feinmechanisch-optisches System nach Anspruch 1 oder 2, **dadurch gekennzeichnet,**
**dass** die Form der Biegeelemente (11 - 15) in einer Dimension dem Biegemomentverlauf angepasst sind und in einer dazu senkrechten Richtung eine gleichmäßige Ausdehnung aufweisen.

4. Feinmechanisch-optisches System nach Anspruch 3, **dadurch gekennzeichnet,**
**dass** die Biegeelemente als zweiseitige Dreiecksfedern (13) ausgebildet sind, die eine gleichmäßige Dicke aufweisen.

5. Feinmechanisch-optisches System nach Anspruch 3, **dadurch gekennzeichnet,**
**dass** die Biegeelemente (14) in einer Dimension eine derartige Variation der Ausdehnung aufweisen, dass bei einer ebenen Grundfläche eine darüber liegende
Oberfläche bogenförmig gekrümmt ist, und dass in einer dazu senkrechten Richtung eine gleichmäßige Ausdehnung vorliegt.

6. Feinmechanisch-optisches System nach einem der Ansprüche 1 bis 5, **dadurch gekennzeichnet,**
**dass** jeweils an einem Ende der Gewindestifte (10) das Biegeelement (11 - 15) festsitzend und an dem anderen Ende das andere Biegeelement (11 -15) durch eine auf den Gewindestift (10) aufgeschraubte Mutter (19) axial verschiebbar vorgesehen ist.

7. Feinmechanisch-optisches System nach Anspruch 6, **dadurch gekennzeichnet,**
**dass** die paarweise gegenüberliegenden Biegeelemente (11 - 15) mit den zugehörigen Gewindestiften (10) konzentrisch um die zueinander ausgerichteten optischen Achsen der optischen Elemente angeordnet sind.

8. Verfahren zur Herstellung eines Verbundes von einzeln in Fassungen gehalterten optischen Elementen mit dem feimechanisch - optischem System gemäß den Merkmalen eines der Ansprüche 1 - 7, **dadurch gekennzeichnet, dass** in einem mehrstufigen Justage- und Montageprozess zunächst
- eine axial spannende Verschraubung der Fassungen mit einer Teilvorspannkraft erfolgt, wonach
- durch laterales Verschieben der einzeln gefassten optischen Elemente die optischen Achsen der optischen Elemente zueinander fluchtend ausgerichtet und danach
- die Fassungen axial verspannend mit einer derartigen Vorspannkraft verschraubt werden, dass ein gegenseitiger fester Sitz der Fassungen zueinander gewährleistet ist.

## Claims

1. A precision-engineering optical system, comprising a combination of optical elements which are held in mounts (3) that are screwed to one another,
radially outwardly projecting flanges (4, 5) being attached to the mounts (3) with mutually facing joining surfaces (6, 7) and the mutually facing joining surfaces (6, 7) of adjoining mounts (3) abutting one another, and mutually aligned through-holes (8, 9) being incorporated in the flanges (4, 5) of adjoining mounts (3), **characterized in that**
threaded pins (10) are disposed with play in the through-holes (8, 9) so as to form axially tensioning screw connections, the ends of the pins being connected to bending elements (11-15), so that the mutually abutting flanges (4, 5) of adjoining mounts (3) are clamped between bending elements (11-15) located opposite of one another in pairs with an opposing spring force.

2. The precision-engineering optical system according to claim 1, **characterized in that** the joining surfaces (6, 7) have a circular ring-shaped design and are disposed coaxially to one another.

3. The precision-engineering optical system according to claim 1 or 2, **characterized in that** the shape of the bending elements (11-15) is adapted in one dimension to the bending moment curve and the extension is uniform in a direction perpendicular thereto.

4. The precision-engineering optical system according to claim 3, **characterized in that** the bending elements are designed as two-sided triangular springs (13) that have a uniform thickness.

5. The precision-engineering optical system according to claim 3, **characterized in that** the bending elements (14) have such a variation in the extension in one dimension that, with a planar base surface, a surface
located thereabove is curved in an arc shape and a uniform extension is present in a direction perpendicular thereto.

6. A precision-engineering optical system according to any one of claims 1 to 5, **characterized in that** the bending element (11-15) is provided in a fixed manner at one end of the threaded pins (10) and the other bending element (11-15) is provided in an axially displaceable manner by means of a nut (19) that is screwed onto the threaded pin (10) at the other end.

7. The precision-engineering optical system according to claim 6, **characterized in that** the bending elements (11-15) located opposite of one another in pairs, along with the related threaded pins (10), are disposed concentrically about the mutually aligned optical axes of the optical elements.

8. A method for producing a combination of optical elements held individually in mounts with the precision-engineering optical system according to the characteristics of one of claims 1 to 7, **characterized in that** in a multistage adjustment and installation process first
- the mounts are screwed on in an axially tensioning manner using a partial pretensioning force, whereupon
- the optical axes of the optical elements are aligned with one another by laterally displacing the individually mounted optical elements, and then
- the mounts are screwed on in an axially tensioning manner using such a pretensioning force that a mutual fixed seat of the mounts relative to one another is ensured.

## Revendications

1. Système optico-mécanique précis, comportant un composite d'éléments optiques, maintenus dans des montures (3) vissées entre elles, dans lequel
des ailettes (4, 5) faisant saillie radialement vers l'extérieur sur les montures (3) avec des faces de joint (6, 7) tournées l'une vers l'autre sont fixées sur les montures (3), et les faces de joint (6, 7) tournées l'une vers l'autre des montures voisines (3) butent les unes contre les autres, et dans lequel
des perçages traversants (8, 9) alignés les uns avec les autres sont prévus dans les ailettes (4, 5) des montures voisines (3), **caractérisé en ce que**
pour la formation de vissages de serrage axial, des tiges filetées (10) sont disposées avec un jeu dans les perçages traversants (8, 9), dont les extrémités sont reliées à des éléments de flexion (11, 15), de sorte que les ailettes (4, 5) butant les unes contre les autres sur des montures voisines (3) sont serrées entre des éléments de flexion (11-15) opposés, disposés par paires, avec une force de ressort inverse.

2. Système optico-mécanique précis selon la revendication 1, **caractérisé en ce que** les faces de joint (6, 7) sont conçues en forme d'anneau circulaire et disposées coaxialement les unes par rapport aux autres.

3. Système optico-mécanique précis selon la revendication 1 ou 2, **caractérisé en ce que** la forme des éléments de flexion (11-15) sont adaptés à l'évolution du couple de flexion dans une dimension, et comportent une extension régulière dans une direction verticale à celle-ci.

4. Système optico-mécanique précis selon la revendication 3, **caractérisé en ce que** les éléments de flexion sont conçus comme des ressorts triangulaires bilatéraux (13) présentant une épaisseur homogène.

5. Système optico-mécanique précis selon la revendication 3, **caractérisé en ce que** les éléments de flexion (14) présentent une variation d'extension telle dans une dimension, qu'avec une surface de base plane, une surface se trouvant au-dessus est courbée en forme d'arc, et **en ce qu'**une extension homogène est présente dans une direction verticale à celle-ci.

6. Système optico-mécanique précis selon l'une des revendications 1 à 5,
**caractérisé en ce que**
à l'une des extrémités des tiges filetées (10), l'élément de flexion (11-15) est respectivement installé fixement, tandis qu'à l'autre extrémité, l'autre élément de flexion (11-15) est déplaçable axialement par un écrou (19) vissé sur la tige filetée (10).

7. Système optico-mécanique précis selon la revendication 6, **caractérisé en ce que** les éléments de flexion opposés par paires (11-15), avec les tiges filetées (10) correspondantes, sont installés de façon concentrique autour des axes optiques des éléments optiques, orientés les uns vers les autres.

8. Procédé pour la fabrication d'un composite d'éléments optiques maintenus individuellement dans des montures, avec le système optico-mécanique précis selon l'une des revendications 1-7, **caractérisé en ce que** tout d'abord, au cours d'un procédé de montage et d'ajustement,
- un vissage de serrage axial des montures a lieu avec une force de précontrainte partielle, après quoi
- par un déplacement latéral des éléments optiques montés individuellement, les axes optiques des éléments optiques sont orientés de façon à être alignés les uns avec les autres, puis
- les montures sont vissées en serrage axial avec une telle force de précontrainte, qu'une assise fixe réciproque est garantie entre les montures.
